# EUROPEAN PATENT SPECIFICATION

(11) **EP 2 752 684 B1**
(45) Date of publication and mention of the grant of the patent: **12.07.2017**
(21) Application number: 12828652.3
(22) Date of filing: 03.09.2012
(51) Int. Cl.: G02B 1/04, B29C 39/02, B29D 11/00, C08G 18/38, G02C 7/02

(54) **METHOD FOR PRODUCING POLYURETHANE LENS**
VERFAHREN ZUR HERSTELLUNG EINER POLYURETHANLINSE
PROCÉDÉ DE PRODUCTION D'UNE LENTILLE DE POLYURÉTHANE

(30) Priority: 01.09.2011 JP 2011191009
(43) Date of publication of application: 09.07.2014
(73) Proprietor: Hoya Corporation, Tokyo 161-8525 (JP)
(72) Inventor: KOUSAKA, Masahisa, Tokyo 161-8525 (JP)
(74) Representative: Hoffmann Eitle
(86) International application number: PCT/JP2012/072378
(87) International publication number: WO 2013/032010

(56) References cited:
- WO-A1-2007/105355
- JP-A- H0 763 902
- JP-A- H1 090 501
- JP-A- H07 104 101
- JP-A- 2006 065 036
- JP-A- 2006 281 610
- JP-A- 2009 083 248

## Description

### Technical Field

The present invention relates to a method for producing a polyurethane lens. More specifically, the present invention relates to a method for producing an optical polyurethane lens through polymerization of a polyisocyanate compound with a polythiol compound containing a polythiol compound that is obtained through esterification reaction of a polyol compound and thioglycolic acid.

### Background Art

For providing a plastic lens having a high refractive index, it has been known that a polyisocyanate compound and a polythiol compound are reacted. For example, there is described a method for producing a polyurethane plastic lens by polymerizing under heat a composition formed by mixing a polyisocyanate compound, such as xylylene diisocyanate, and a polythiol compound, such as pentaerythritol tetrakis(mercaptoacetate) (PETMA) and trimethylolpropane tris(mercaptoacetate) (see PTL 1).

However, pentaerythritol tetrakis(mercaptoacetate) has very high reactivity with a polyisocyanate compound, and therefore the composition formed by mixing these compounds suffers notable increase in viscosity with the lapse of time, which causes deterioration in workability, such as difficulty on injecting into a mold.

For solving the problem, such a method has been known that a polyisocyanate compound, to which an alkyl tin halide compound has been added in advance, is mixed and polymerized with pentaerythritol tetrakis(mercaptoacetate) or dipentaerythritol tetrakis(mercaptoacetate) (see PTLs 2 and 3).

However, the alkyl tin halide compound functions as a polymerization catalyst, and therefore most of polyisocyanate compounds having an alkyl tin halide compound added thereto in advance is reacted with water in the air or in the environment, resulting in deterioration of the polyisocyanate compound in some cases.

### Citation List

### Patent Literatures

PTL 1: JP-A-60-199016
PTL 2: JP-A-7-104101
PTL 3: JP-A-10-90501

### Summary of Invention

### Technical Problem

An object of the present invention is to provide a method for producing a polyurethane lens that suffers less deterioration of a polyisocyanate compound due to water and less increase in viscosity with the lapse of time of a composition formed by mixing a polyisocyanate compound with a polythiol compound containing a polythiol compound that is obtained through esterification reaction of a polyol compound and thioglycolic acid, and thus is excellent in workability.

### Solution to Problem

As a result of earnest investigation made by the present inventors, it has been found that the problem is solved by mixing a polyisocyanate compound with a specific acidic phosphate ester, and then adding a polythiol compound and a polymerization catalyst thereto to prepare a composition.

Accordingly, the present invention relates to a method for producing a polyurethane lens, containing polymerizing a composition containing (A) a polyisocyanate compound, (B) a polythiol compound containing a polythiol compound that is obtained through esterification reaction of a polyol compound and thioglycolic acid, (C) a polymerization catalyst, and from 0.001 to 0.5 part by mass per 100 parts by mass in total of the components (A) and (B) of (D) an acidic phosphate ester compound represented by the following general formula (1), the method containing a step of preparing the composition by mixing the components (A) and (D), and then adding the components (B) and (C) thereto: 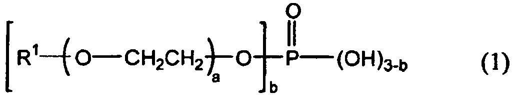 wherein in the general formula (1), R¹ represents an alkyl group having from 1 to 20 carbon atoms or an aryl group having from 6 to 10 carbon atoms; a represents a number of from 0 to 2; and b represents a number of 1 or 2.

### Advantageous Effects of Invention

According to the present invention, even by using a polyisocyanate compound and a polythiol compound containing a polythiol compound that is obtained through esterification reaction of a polyol compound and thioglycolic acid, a composition formed by mixing them suffers less increase in viscosity with the lapse of time, thereby providing a method for producing a polyurethane lens excellent in workability.

### Description of Embodiments

### Method for producing Polyurethane Lens

The present invention relates to a method for producing a polyurethane lens, containing polymerizing a composition containing (A) a polyisocyanate compound, (B) a polythiol compound containing a polythiol compound that is obtained through esterification reaction of a polyol compound and thioglycolic acid, (C) a polymerization catalyst, and from 0.001 to 0.5 part by mass per 100 parts by mass in total of the components (A) and (B) of (D) an acidic phosphate ester compound represented by the above-described general formula (1), in which the method contains a step of preparing the composition by mixing the components (A) and (D), and then adding the components (B) and (C) thereto.

In other words, the composition may be suppressed in increase of the viscosity thereof with the lapse of time by preparing the composition in such a manner that the components (A) and (D) are mixed firstly, and then the components (B) and (C) are added thereto.

Furthermore, there are some cases where (A) the polyisocyanate compound may be deteriorated with water when (C) the polymerization catalyst is added to the component (A) in advance, but the problem may be avoided in the present invention.

### (A) Polyisocyanate Compound

(A) The polyisocyanate compound used in the present invention may be any compound that has two or more isocyanate groups in the molecule thereof without particular limitation. Examples thereof include a polyisocyanate compound having an aromatic ring, an aliphatic polyisocyanate compound and a polyisocyanate compound having an alicyclic structure.

Examples of the polyisocyanate compound having an aromatic ring include 1,4-phenylene diisocyanate, methyl-1,3-phenylene diisocyanate, 1,3-bis(isocyanatomethyl)benzene, mesitylene triisocyanate, 1,3-bis(2-isocyanatopropyl)benzene, 4,4'-diphenylmethane diisocyanate, 2,4'-diphenylmethane diisocyanate, 1,5-diisocyanatonaphthalene and (3,3'-dimethyl-4,4'-biphenylylene) diisocyanate.

Examples of the aliphatic polyisocyanate compound include hexamethylene diisocyanate, lysine ester triisocyanate and hexamethylene triisocyanate, and examples of the polyisocyanate compound having an alicyclic structure include isophorone diisocyanate, bis(isocyanatomethyl)cyclohexane, dicyclohexylmethane diisocyanate, cyclohexane diisocyanate, bis(isocyanatomethyl)bicycloheptane, tris(isocyanatomethyl)cyclohexane and bis(isocyanatomethyl)-1,4-dithiane.

The polyisocyanate compounds may be used solely or as a combination of two or more kinds thereof.

The polyisocyanate compounds that provide the advantageous effects of the present invention remarkably among the above are hexamethylene diisocyanate, isophorone diisocyanate, bis(isocyanatomethyl)cyclohexane, dicyclohexylmethane diisocyanate, bis(isocyanatomethyl)bicycloheptane, methyl-1,3-phenylene diisocyanate, 1,3-bis(isocyanatomethyl)benzene and 4,4'-diphenylmethane diisocyanate, and at least one compound selected therefrom is preferably used.

### (B) Polythiol Compound obtained through Esterification Reaction of Polyol Compound and Thioglycolic Acid

(B) The polythiol compound used in the present invention contains, as an essential component, a polythiol compound that is obtained through esterification reaction of a polyol compound and thioglycolic acid. The polythiol compound that is obtained through esterification reaction of a polyol compound and thioglycolic acid has high reactivity with the component (A), and thus considerable increase of the viscosity may occur when the component (A) and the component (B) are mixed firstly. Accordingly, the advantageous effects of the present invention may be exhibited remarkably.

Examples of the polyol compound include compounds having two or more hydroxyl groups in the molecule thereof, and examples thereof include ethylene glycol, diethylene glycol, propanediol, propanetriol, butanediol, trimethylolpropane, bis(2-hydroxyethyl) disulfide, pentaerythritol and dipentaerythritol.

Examples of the polythiol compound that is obtained through esterification reaction of a polyol compound and thioglycolic acid contained in the component (B) include ethylene glycol di(mercaptoacetate), diethylene glycol bis(mercaptoacetate), propanetriol tris(mercaptoacetate), propanediol bis(mercaptoacetate), butanediol di(mercaptoacetate), trimethylolpropane tris(mercaptoacetate), ethylenebis(2-hydroxyethylsulfide) bis(mercaptoacetate), trimethylolpropane tris(mercaptoacetate), pentaerythritol tetrakis(mercaptoacetate) and dipentaerythritol hexa(mercaptoacetate).

The component (B) may be constituted only by the polythiol compound that is obtained through esterification reaction of a polyol compound and thioglycolic acid, or may contain a polythiol compound other than the polythiol compound obtained through the esterification reaction of a polyol compound and thioglycolic acid. The content of the polythiol compound that is obtained through esterification reaction of a polyol compound and thioglycolic acid in the component (B) is preferably from 30 to 100% by mass, and more preferably from 50 to 100% by mass.

Examples of the polythiol compound other than the polythiol compound that is obtained through esterification reaction of a polyol compound and thioglycolic acid include an aliphatic polythiol compound and a polythiol compound having an alicyclic structure, such as 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, 2,3-dimercapto-1-propanol, ethylene glycol bis(3-mercaptopropionate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, bis(2-mercaptoethyl) sulfide, bis(2-mercaptoethyl) disulfide, trimethylolpropane bis(3-mercaptopropionate), pentaerythritol tetrakis(3-mercaptopropionate), 2,5-bis(mercaptomethyl)-1,4-dithiane, bis((2-mercaptoethyl)thio)-3-mercaptopropane, 4,7-bis(mercaptomethyl)-3,6,9-trithiaundecane-1,11-dithiol, 4,8-bis(mercaptomethyl)-3,6,9-trithiaundecane-1,11-dithiol and 5,7-bis(mercaptomethyl)-3,6,9-trithiaundecane-1,11-dithiol, and an aromatic polythiol compound, such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl)propane-2,2-dithiol, 1,3-diphenylpropane-2,2-dithiol, phenylmethane-1,1-dithiol and 2,4-di(p-mercaptophenyl)pentane.

In the case where the polythiol compound other than the polythiol compound that is obtained through esterification reaction of a polyol compound and thioglycolic acid is used, 2,5-bis(mercaptomethyl)-1,4-dithiane, bis((2-mercaptoethyl)thio)-3-mercaptopropane, 4,7-bis(mercaptomethyl)-3,6,9-trithiaundecane-1,11-dithiol, 4,8-bis(mercaptomethyl)-3,6,9-trithiaundecane-1,11-dithiol and 5,7-bis(mercaptomethyl)-3,6,9-trithiaundecane-1,11-dithiol are preferably used among the above from the standpoint of the refractive index and the heat resistance of the resulting polyurethane lens.

The polythiol compounds may be used solely or as a combination of two or more kinds thereof.

The mixing ratio of (A) the polyisocyanate compound and (B) the polythiol compound is preferably in a range of from 0.5 to 2.0, and more preferably in a range of from 0.95 to 1.05, in terms of the molar ratio of the NCO group in the component (A) and the SH group in the component (B) (NCO group/SH group).

When the residual ratio of the NCO group is small, the resulting polyurethane lens may have good weather resistance and may be free of problems, such as brown coloration. When the residual ratio of the SH group is small, sufficient heat resistance (Tg) may be obtained. The molar ratio of NCO group/SH group that is closer to 1.0 may provide smaller residual ratios of the unreacted NCO group and SH group in the polymerization reaction of the components (A) and (B). Due to a smaller amount of the unreacted groups, a polyurethane lens excellent in weather resistance and heat resistance may be obtained.

### (C) Polymerization Catalyst

(C) The polymerization catalyst used in the present invention is preferably an organic tin compound, and more preferably an alkyl tin halide compound represented by the following general formula (2) or an alkyl tin compound represented by the following general formula (3):

   (R²)_{c}-Sn-X_{4-c} (2)

   wherein in the general formula (2), R² represents an alkyl group having from 1 to 4 carbon atoms; X represents a fluorine atom, a chlorine atom or a bromine atom; and c represents an integer of from 1 to 3,

   (R³)₂-Sn-(O-C(=O)-R⁴)₂ (3)

   wherein in the general formula (3), R³ represents an alkyl group having from 1 to 4 carbon atoms; and R⁴ represents an alkyl group having from 1 to 11 carbon atoms.

Examples of the alkyl tin halide compound represented by the general formula (2) include dibutyl tin dichloride, dimethyl tin dichloride, monomethyl tin trichloride, trimethyl tin chloride, tributyl tin chloride, tributyl tin fluoride and dimethyl tin dibromide, and examples of the alkyl tin compound represented by the general formula (3) include dibutyl tin diacetate and dibutyl tin dilaurate.

Among these, dibutyl tin dichloride and dimethyl tin dichloride are preferably used from the standpoint of reaction rate in the case where the aliphatic polyisocyanate is used as the component (A), and dibutyl tin diacetate and dibutyl tin dilaurate are preferably used in the case where the aromatic polyisocyanate is used as the component (A). However, the preferred compound may not be determined unconditionally since it depends on the reactivity of the polyisocyanate compound and the polythiol compound used, and the polymerization catalysts referred to herein may be used solely or as a combination of two or more kinds thereof for preventing the transparency of the optical lens from being deteriorated and for preventing striae from being formed therein.

The amount of (C) the polymerization catalyst added is preferably from 0.001 to 1 part by mass per 100 parts by mass in total of the components (A) and (B) from the standpoint of the polymerization rate of the components (A) and (B).

### (D) Acidic Phosphate Ester Compound

(D) The acidic phosphate ester compound used in the present invention is a compound represented by the following general formula (1): 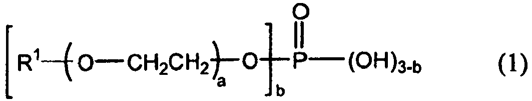 wherein in the general formula (1), R¹ represents an alkyl group having from 1 to 20 carbon atoms or an aryl group having from 6 to 10 carbon atoms; a represents a number of from 0 to 2; and b represents a number of 1 or 2.
(B) The polythiol compound containing a polythiol compound that is obtained through esterification reaction of a polyol compound and thioglycolic acid shows a remarkably large reaction rate with (A) the polyisocyanate compound, but by mixing the components (A) and (D) firstly and then adding the components (B) and (C) thereto, the resulting composition may be prevented from suffering increase of the viscosity thereof with the lapse of time, thereby enhancing the workability in production of a polyurethane lens.

Examples of the component (D) include a phosphate monoester and a phosphate diester, such as isopropyl acid phosphate, diisopropyl acid phosphate, butyl acid phosphate, dibutyl acid phosphate, butoxyethyl acid phosphate, dibutoxyethyl acid phosphate, hexyl acid phosphate, dihexyl acid phosphate, octyl acid phosphate, dioctyl acid phosphate, 2-ethylhexyl acid phosphate, di(2-ethylhexyl) acid phosphate, nonyl acid phosphate, dinonyl acid phosphate, decyl acid phosphate, didecyl acid phosphate, dodecyl acid phosphate, didodecyl acid phosphate, tridecyl acid phosphate, di(tridecyl) acid phosphate, isotridecyl acid phosphate, di(isotridecyl) acid phosphate, tetradecyl acid phosphate, di(tetradecyl) acid phosphate, hexadecyl acid phosphate, dihexadecyl acid phosphate, stearyl acid phosphate, distearyl acid phosphate, phenyl acid phosphate, di(phenyl) acid phosphate, propylphenyl acid phosphate, di(propylphenyl) acid phosphate, butylphenyl acid phosphate, di(butylphenyl) acid phosphate, butoxyethoxyethyl acid phosphate and di(butoxyethoxyethyl) acid phosphate.

These compounds may be used solely or as a combination of two or more kinds thereof, and a mixture of a phosphate monoester compound and a phosphate diester compound is preferably used as the component (D) from the standpoint of the solubility in the composition and the effect of suppressing increase of the viscosity of the composition. When the component (D) contains a phosphate monoester compound, good solubility in the composition may be obtained, and when the component (D) contains a phosphate diester compound, an excellent effect of suppressing increase of the viscosity of the composition may be obtained.

From the standpoint of the solubility in the composition, the component (D) used is preferably at least one selected from a mixture of butoxyethyl acid phosphate and dibutoxyethyl acid phosphate, a mixture of butoxyethoxyethyl acid phosphate and di(butoxyethoxyethyl) acid phosphate, and a mixture of isotridecyl acid phosphate and di(isotridecyl) acid phosphate.

The amount of (D) the acidic phosphate ester compound added is from 0.001 to 0.5 part by mass, and preferably from 0.01 to 0.3 part by mass, per 100 parts by mass in total of the components (A) and (B). When the amount of the component (D) added is less than 0.001 part by mass, it may fail to provide the effect of preventing the composition from suffering increase of the viscosity thereof with the lapse of time by mixing the components (A) and (D) firstly and then adding the components (B) and (C) thereto, and when the amount exceeds 0.5 part by mass, there may be a problem, such as whitening of the resulting composition, in some cases.

### Additional Components

In the production of a polyurethane lens of the present invention, an ultraviolet ray absorbent, an antioxidant, a mold releasing agent, a crosslinking agent, a light stabilizer, a coloration preventing agent, a dye, a viscosity modifier, a polymerization modifier may be used depending on necessity in addition to the components (A) to (D).

Examples of the ultraviolet ray absorbent include various benzophenone compounds, such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone and 2,2'-dihydroxy-4-methoxybenzophenone, various benzotriazole compounds, such as 2-(2'-hydroxy-5'-methylphenyl)benzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2'-hydroxy-3',5'-di-t-amylphenyl)benzotriazole, 2-(2'-hydroxy-3',5'-di-t-butylphenyl)benzotriazole, 2-(2'-hydroxy-5'-t-butylphenyl)benzotriazole, 2-(2'-hydroxy-5'-t-octylphenyl)benzotriazole and 2-(2-hydroxy-4-octyloxyphenyl)benzotriazole, dibenzoylmethane, and 4-tert-butyl-4'-methoxybenzoylmethane. The ultraviolet ray absorbent may be used solely or as a combination of two or more kinds thereof.

The amount of the ultraviolet ray absorbent added is preferably from 0.01 to 5 parts by mass, more preferably from 0.05 to 3 parts by mass, and further preferably from 0.05 to 1 part by mass, per 100 parts in total of the components (A) and (B). When the amount thereof added is 0.01 part by mass or more, a sufficient ultraviolet ray absorbing effect may be obtained, and when the amount is 5 parts by mass or less, the resulting polyurethane lens may not be colored considerably, and the appearance thereof may be improved with a bluing agent.

The polyurethane lens of the present invention is produced by mixing the components (A) to (D) and the additional component depending on necessity to prepare a composition, and polymerizing the resulting composition. After mixing the components (A) and (D), the order of addition of the components (B) and (C) is not particularly limited, and the components (B) and (C) may be added simultaneously or may be added sequentially in an arbitrary order.

The composition may be polymerized by any known method, and mold casting polymerization is preferably employed from the standpoint of producing a polyurethane lens. The mold casting polymerization may be performed, for example, in such a manner that the components (A) to (D) and the additional component depending on necessity are mixed to prepare a composition, and the composition is then cast in a mold containing a combination of a glass or metal mold and a resin gasket, and polymerized under heating. The polymerization conditions may vary depending on the kinds of the components (A) and (B) used, and may be, for example, a polymerization temperature of from 0 to 150°C and a polymerization time of from 0.5 to 72 hours.

The polyurethane lens thus obtained by the production method is useful, for example, as a spectacle lens, a camera lens, a projector lens, a telescope lens, a magnifier lens.

### Example

### Examples 1 to 7 and Comparative Examples 1 to 7

The present invention will be described in more detail with reference to examples, but the present invention is not limited to the examples.

The compositions for a polyurethane lens obtained in Examples and Comparative Examples were measured for viscosity with a viscometer (Model: Kosumomeito VM-10A, produced by Sekonic Corporation).

The compositions for a polyurethane lens and the polyurethane lenses obtained in Examples and Comparative Examples were evaluated for appearance visually. In Table 1, a composition for a polyurethane lens having no turbidity is expressed as "A", and one having turbidity observed is expressed as "B". A polyurethane lens thus obtained that is colorless and transparent is expressed as "A".

### Example 1

48.5 parts by mass of bis(isocyanatomethyl)cyclohexane, which is a polyisocyanate compound, 0.185 part by mass of a mixture of butoxyethyl acid phosphate and dibutoxyethyl acid phosphate, which are acidic phosphate ester compounds, (JP-506H, a trade name, produced by Johoku Chemical Co., Ltd.), and 1.025 parts by mass of 2-(2-hydroxy-4-octyloxyphenyl)benzotriazole, which is an ultraviolet ray absorbent, were mixed. To the mixture, 0.461 part by mass of dimethyl tin dichloride, which is a polymerization catalyst, and 54.0 parts by mass of pentaerythritol tetrakis(mercaptoacetate), which is a polythiol compound, were added and mixed, thereby providing a composition for a polyurethane lens. The appearance of the resulting composition observed visually was a transparent homogeneous solution.

The resulting composition was defoamed for 5 minutes and then allowed to stand in a thermostat furnace at 25°C, and the viscosity thereof was measured after 1 minute, 5 minutes, 10 minutes and 1 hour. The viscosity was 37 mPa·s after allowing to stand for 1 minute, 37 mPa·s after 5 minutes, 39 mPa·s after 10 minutes, and 84 mPa·s after 1 hour, and thus a sufficient pot life was obtained.

Thereafter, the composition thus prepared was cast in a mold containing a mold and a gasket and polymerized under heating at a temperature gradually increased from 20°C to 120°C over 20 hours, thereby producing a polyurethane lens. After completing the polymerization, the polymerized product was gradually cooled, taken out from the mold containing a mold and a gasket, and observed visually for the appearance thereof. The polymerized product was colorless and transparent, and thus a favorable polyurethane lens was obtained. The evaluation results are shown in Table 1.

### Example 2

A composition for a polyurethane lens was prepared in the same manner as in Example 1 except that the acidic phosphate ester compound was changed to 0.051 part by mass of a mixture of isotridecyl acid phosphate and di(isotridecyl) acid phosphate (JP-513, a trade name, produced by Johoku Chemical Co., Ltd.), and the measurement of the viscosity of the composition and the production of a polyurethane lens were performed. The evaluation results are shown in Table 1.

### Example 3

A composition for a polyurethane lens was prepared in the same manner as in Example 1 except that the adding amount of the mixture of butoxyethyl acid phosphate and dibutoxyethyl acid phosphate, which are acidic phosphate ester compounds, (JP-506H, a trade name, produced by Johoku Chemical Co., Ltd.) was changed to 0.103 part by mass, and the measurement of the viscosity of the composition and the production of a polyurethane lens were performed. The evaluation results are shown in Table 1.

### Example 4

48.5 parts by mass of bis(isocyanatomethyl)cyclohexane, which is a polyisocyanate compound, 0.204 part by mass of a mixture of butoxyethyl acid phosphate and dibutoxyethyl acid phosphate, which are acidic phosphate ester compounds, (JP-506H, a trade name, produced by Johoku Chemical Co., Ltd.), and 1.020 parts by mass of 2-(2-hydroxy-4-octyloxyphenyl)benzotriazole, which is an ultraviolet ray absorbent, were mixed. To the mixture, 0.460 part by mass of dimethyl tin dichloride, which is a polymerization catalyst, and 27.0 parts by mass of pentaerythritol tetrakis(mercaptoacetate) and 26.5 parts by mass of 2,5-bis(mercaptomethyl)-1,4-dithiane, which are polythiol compounds, were added and mixed, thereby providing a composition for a polyurethane lens.

The measurement of the viscosity of the composition and the production of a polyurethane lens were performed in the same manner as in Example 1. The evaluation results are shown in Table 1.

### Example 5

42.0 parts by mass of hexamethylene diisocyanate, which is a polyisocyanate compound, 0.020 part by mass of a mixture of butoxyethyl acid phosphate and dibutoxyethyl acid phosphate (JP-506H, a trade name, produced by Johoku Chemical Co., Ltd.), and 0.048 part by mass of a mixture of isotridecyl acid phosphate and di(isotridecyl) acid phosphate (JP-513, a trade name, produced by Johoku Chemical Co., Ltd.), which are acidic phosphate ester compounds, and 0.48 part by mass of 2-(2-hydroxy-4-octyloxyphenyl)benzotriazole, which is an ultraviolet ray absorbent, were mixed. To the mixture, 0.100 part by mass of dimethyl tin dichloride, which is a polymerization catalyst, and 54.0 parts by mass of pentaerythritol tetrakis(mercaptoacetate), which is a polythiol compound, were added and mixed, thereby providing a composition for a polyurethane lens.

The measurement of the viscosity of the composition and the production of a polyurethane lens were performed in the same manner as in Example 1. The evaluation results are shown in Table 1.

### Example 6

42.0 parts by mass of hexamethylene diisocyanate, which is a polyisocyanate compound, 0.019 part by mass of a mixture of butoxyethyl acid phosphate and dibutoxyethyl acid phosphate (JP-506H, a trade name, produced by Johoku Chemical Co., Ltd.), and 0.048 part by mass of a mixture of isotridecyl acid phosphate and di(isotridecyl) acid phosphate (JP-513, a trade name, produced by Johoku Chemical Co., Ltd.), which are acidic phosphate ester compounds, and 0.478 part by mass of 2-(2-hydroxy-4-octyloxyphenyl)benzotriazole, which is an ultraviolet ray absorbent, were mixed. To the mixture, 0.100 part by mass of dimethyl tin dichloride, which is a polymerization catalyst, and 27.0 parts by mass of pentaerythritol tetrakis(mercaptoacetate) and 26.5 parts by mass of 2,5-bis(mercaptomethyl)-1,4-dithiane, which are polythiol compounds, were added and mixed, thereby providing a composition for a polyurethane lens.

The measurement of the viscosity of the composition and the production of a polyurethane lens were performed in the same manner as in Example 1. The evaluation results are shown in Table 1.

### Example 7

31.3 parts by mass of 4,4'-diphenylmethane diisocyanate and 21.0 parts by mass of hexamethylene diisocyanate, which are polyisocyanate compounds, 0.050 part by mass of a mixture of isotridecyl acid phosphate and di(isotridecyl) acid phosphate (JP-513, a trade name, produced by Johoku Chemical Co., Ltd.), which are acidic phosphate ester compounds, and 0.53 part by mass of 2-(2-hydroxy-4-octyloxyphenyl)benzotriazole, which is an ultraviolet ray absorbent, were mixed. To the mixture, 0.100 part by mass of dimethyl tin dichloride, which is a polymerization catalyst, and 54.0 parts by mass of pentaerythritol tetrakis(mercaptoacetate), which is a polythiol compound, were added and mixed, thereby providing a composition for a polyurethane lens.

The measurement of the viscosity of the composition and the production of a polyurethane lens were performed in the same manner as in Example 1. The evaluation results are shown in Table 1.

### Comparative Example 1

A composition for a polyurethane lens was prepared in the same manner as in Example 1 except that the mixture of butoxyethyl acid phosphate and dibutoxyethyl acid phosphate, which are acidic phosphate ester compounds, (JP-506H, a trade name, produced by Johoku Chemical Co., Ltd.) was not mixed. The evaluation results are shown in Table 1. The composition thus prepared generated heat after allowing to stand for 1 minute and was gelled after 5 minutes, and thus a sufficient pot life was not obtained.

### Comparative Example 2

A composition for a polyurethane lens was prepared in the same manner as in Example 4 except that the mixture of butoxyethyl acid phosphate and dibutoxyethyl acid phosphate, which are acidic phosphate ester compounds, (JP-506H, a trade name, produced by Johoku Chemical Co., Ltd.) and the mixture of isotridecyl acid phosphate and di(isotridecyl) acid phosphate (JP-513, a trade name, produced by Johoku Chemical Co., Ltd.) were not mixed. The evaluation results are shown in Table 1. The composition thus prepared generated heat after allowing to stand for 5 minutes and was gelled after 10 minutes, and thus a sufficient pot life was not obtained.

### Comparative Example 3

A composition for a polyurethane lens was prepared in the same manner as in Comparative Example 1 except that dicyclohexylmethane diisocyanate was used as the polyisocyanate compound. The evaluation results are shown in Table 1. The composition thus prepared generated heat after allowing to stand for 1 minute and was gelled after 5 minutes, and thus a sufficient pot life was not obtained.

### Comparative Example 4

A composition for a polyurethane lens was prepared in the same manner as in Comparative Example 1 except that isophorone diisocyanate was used as the polyisocyanate compound. The evaluation results are shown in Table 1. The composition thus prepared generated heat after allowing to stand for 1 minute and was gelled after 5 minutes, and thus a sufficient pot life was not obtained.

### Comparative Example 5

A composition for a polyurethane lens was prepared in the same manner as in Example 5 except that the mixture of butoxyethyl acid phosphate and dibutoxyethyl acid phosphate, which are acidic phosphate ester compounds, (JP-506H, a trade name, produced by Johoku Chemical Co., Ltd.) and the mixture of isotridecyl acid phosphate and di(isotridecyl) acid phosphate (JP-513, a trade name, produced by Johoku Chemical Co., Ltd.) were not mixed. The evaluation results are shown in Table 1. The composition thus prepared generated heat after allowing to stand for 5 minutes and was gelled after 10 minutes, and thus a sufficient pot life was not obtained.

### Comparative Example 6

A composition for a polyurethane lens was prepared in the same manner as in Comparative Example 1 except that 1,3-bis(isocyanatomethyl)benzene was used as the polyisocyanate compound. The evaluation results are shown in Table 1. The composition thus prepared generated heat after allowing to stand for 5 minutes and was gelled after 10 minutes, and thus a sufficient pot life was not obtained.

### Comparative Example 7

A composition for a polyurethane lens was prepared in the same manner as in Example 7 except that the mixture of isotridecyl acid phosphate and di(isotridecyl) acid phosphate, which are acidic phosphate ester compounds, (JP-513, a trade name, produced by Johoku Chemical Co., Ltd.) was not mixed. The evaluation results are shown in Table 1. The composition thus prepared generated heat after allowing to stand for 1 minute and was gelled after 5 minutes, and thus a sufficient pot life was not obtained.

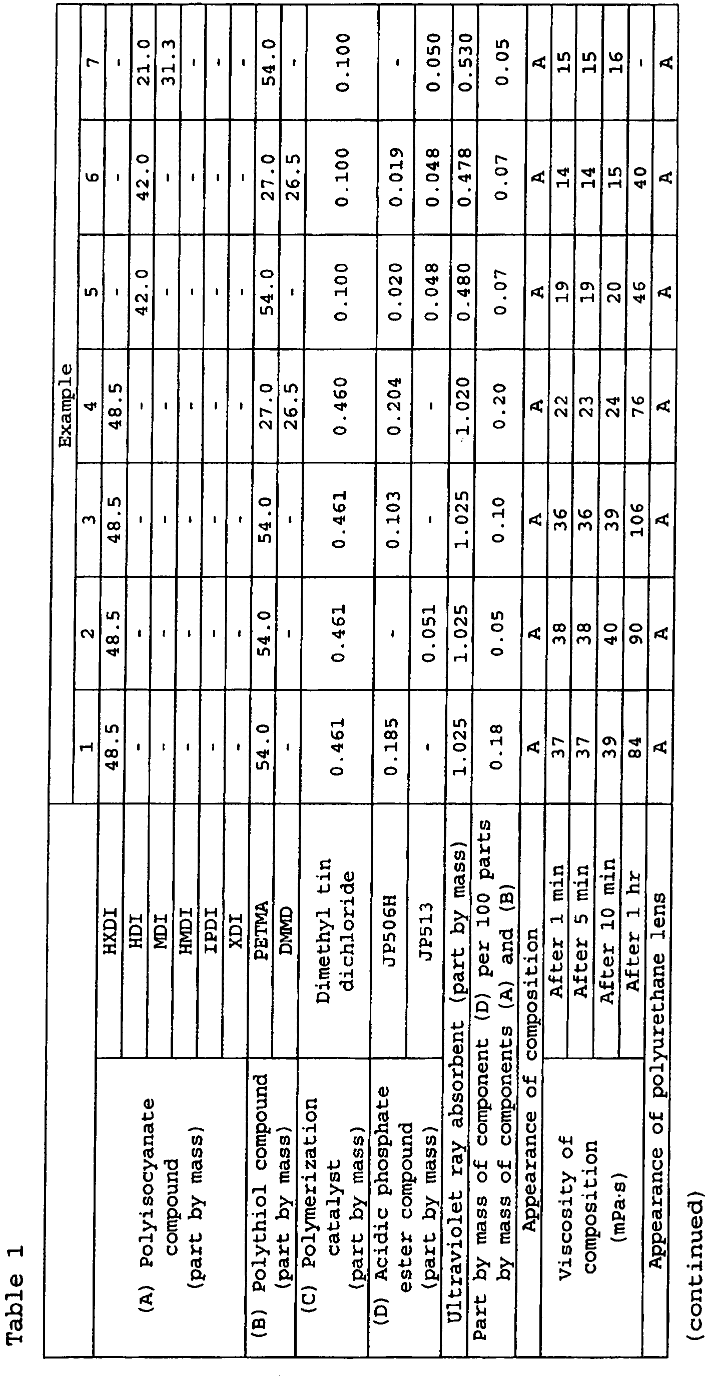

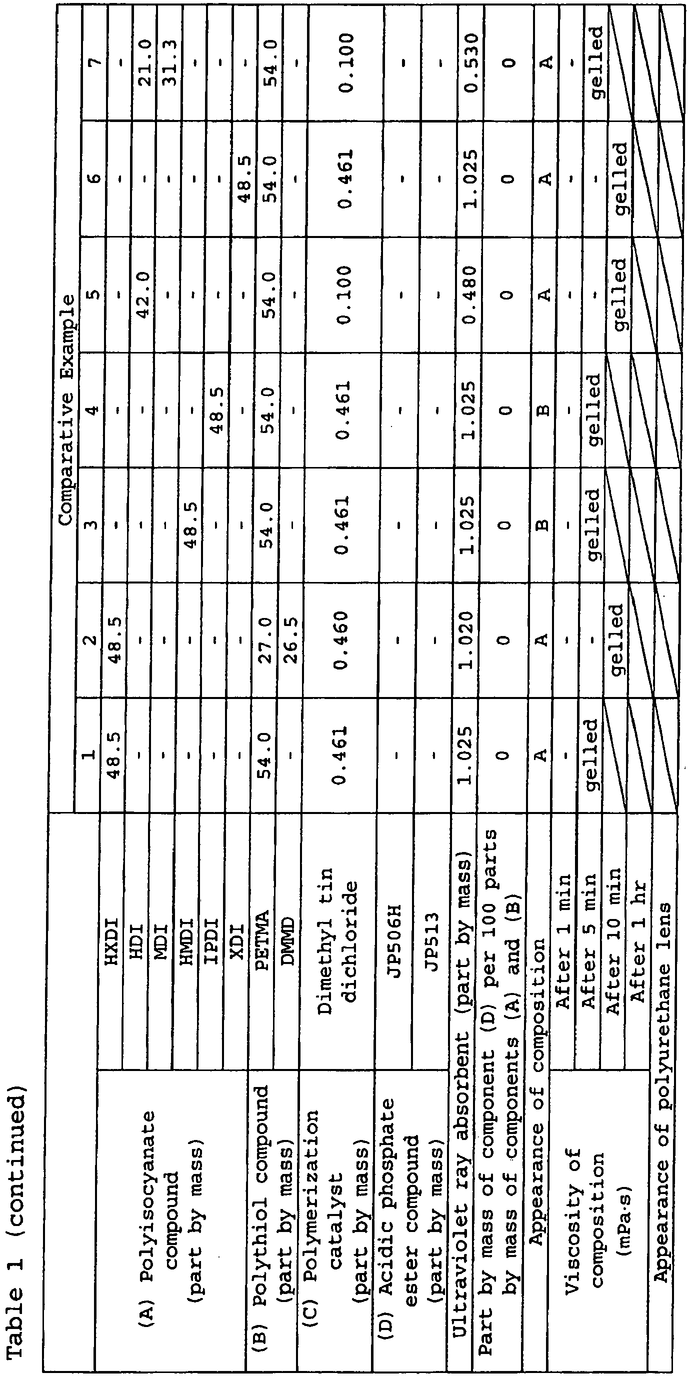

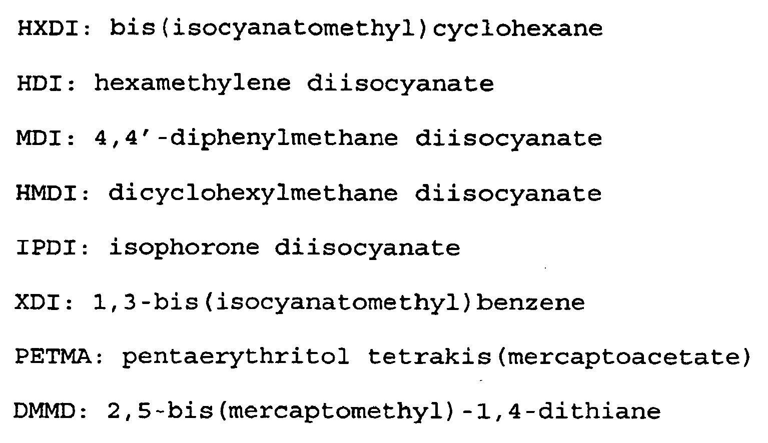

### Industrial Applicability

According to the present invention, a method for producing a polyurethane lens excellent in workability is provided, and a polyurethane lens produced by the production method is favorably used as a spectacle lens, a camera lens, a projector lens, a telescope lens, a magnifier lens.

## Claims

1. A method for producing a polyurethane lens, comprising polymerizing a composition containing
- a polyisocyanate compound (A),
- a polythiol compound (B) obtained through esterification reaction of a polyol compound and thioglycolic acid,
- a polymerization catalyst (C), and
- 0.001-0.5 pbw, per 100 pbw of [(A)+(B)], of an acidic phosphate ester compound (D) of formula (1), 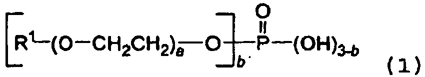 wherein R¹ is C₁₋₂₀-alkyl or C₆₋₁₀-aryl; *a* is a number of 0-2; and *b* is 1 or 2;
which method comprises preparing the composition by mixing the components (A) and (D), and then adding the components (B) and (C) thereto.

2. The method of claim 1, wherein compound (A) is at least one compound selected from hexamethylene diisocyanate, isophorone diisocyanate, bis(isocyanatomethyl) cyclohexane, dicyclohexylmethane diisocyanate, bis(isocyanatomethyl)bicycloheptane, methyl-1,3-phenylene diisocyanate, 1,3-bis(isocyanatomethyl)benzene and 4,4'-diphenylmethane diisocyanate.

3. The method of claim 1 or 2, wherein compound (B) is at least one compound selected from ethylene glycol di(mercaptoacetate), diethylene glycol bis(mercaptoacetate), propanetriol tris(mercaptoacetate), propanediol bis(mercaptoacetate), butanediol di(mercaptoacetate), trimethylolpropane tris(mercaptoacetate), ethylenebis(2-hydroxyethylsulfide) bis(mercaptoacetate), trimethylolpropane tris(mercaptoacetate), pentaerythritol tetrakis(mercaptoacetate) and dipentaerythritol hexa(mercaptoacetate).

4. The method of any of claims 1-3, wherein the polymerization catalyst (C) is an organic tin compound of formula (2) or (3):
(R²)*_{c}*-Sn-X_{4-*c*} (2)
wherein R² is C₁₋₄-alkyl; X is F, Cl or Br; and c is an integer of 1-3, or
(R³)₂-Sn-(O-C(=O)-R⁴)₂ (3)
wherein R³ is C₁₋₄-alkyl, and R⁴ is C₁₋₁₁-alkyl.

5. The method of any of claims 1-4, wherein the compound (D) of formula (1) is at least one selected from a mixture of butoxyethyl acid phosphate and dibutoxyethyl acid phosphate, a mixture of butoxyethoxyethyl acid phosphate and di(butoxyethoxyethyl) acid phosphate, and a mixture of isotridecyl acid phosphate and di(isotridecyl) acid phosphate.

## Patentansprüche

1. Verfahren zur Herstellung einer Polyurethan-Linse, umfassend das Polymerisieren einer Zusammensetzung, die
- eine Polyisocyanat-Verbindung (A),
- eine durch Veresterung einer Polyol-Verbindung und Thioglykolsäure erhaltene Polythiol-Verbindung (B),
- einen Polymerisationskatalysator (C), und
- 0.001-0.5 Gewichtsteile, bezogen auf 100 Gewichtsteile [(A)+(B)], einer aziden Phosphatester-Verbindung (D) der Formel (1), 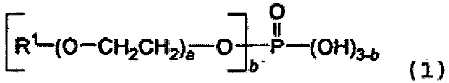 worin R¹ C₁₋₂₀-Alkyl oder C₆₋₁₀-Aryl ist; a eine Zahl von 0-2 ist; und b 1 oder 2 ist;
enthält, wobei das Verfahren die Herstellung der Zusammensetzung durch Mischen der Komponenten (A) und (D), und die anschließende Zugabe der Komponenten (B) und (C) umfasst.

2. Verfahren gemäß Anspruch 1, worin Verbindung (A) mindestens eine Verbindung ist, ausgewählt aus Hexamethylendiisocyanat, Isophorondiisocyanat, Bis(isocyanatomethyl)cyclohexan, Dicyclohexylmethandiisocyanat, Bis(isocyanatomethyl)bicycloheptan, Methyl-1,3-phenylendiisocyanat, 1,3-Bis(isocyanatomethyl)benzol und 4,4'-Diphenylmethandiisocyanat.

3. Verfahren gemäß Anspruch 1 oder 2, worin Verbindung (B) mindestens eine Verbindung ist, ausgewählt aus Ethylenglykol-di(mercaptoacetat), Diethylenglykol-bis(mercaptoacetat), Propantriol-tris(mercaptoacetat), Propandiol-bis(mercaptoacetat), Butandiol-di(mercaptoacetat), Trimethylolpropan-tris(mercaptoacetat), Ethylen-bis(2-hydroxyethylsulfid)-bis(mercaptoacetat), Trimethylolpropan-tris(mercaptoacetat), Pentaerythritol-tetrakis(mercaptoacetat) und Dipentaerythritol-hexa(mercaptoacetat).

4. Verfahren gemäß mindestens einem der Ansprüche 1-3, worin der Polymerisationskatalysator (C) eine organische Zinn-Verbindung der Formel (2) oder (3) ist:
(R²)*_{c}*-Sn-X_{4-*c*} (2)
worin R² C₁₋₄-Alkyl ist; X ist F, Cl oder Br; und c ist eine Zahl von 1-3, oder
(R³)₂-Sn-(O-C(=O)-R⁴)₂ (3)
worin R³ C₁₋₄-Alkyl ist, und R⁴ ist C₁₋₁₁-Alkyl.

5. Verfahren gemäß mindestens einem der Ansprüche 1-4, worin die Verbindung (D) der Formel (1) mindestens eine ist, ausgewählt aus einem Gemisch aus Butoxyethylsäurephosphat und Dibutoxyethylsäurephosphat, einem Gemisch aus Butoxyethoxyethylsäurephosphat und Di(butoxyethoxyethyl)säurephosphat, und einem Gemisch aus Isotridecylsäurephosphat und Di(isotridecyl)säurephosphat.

## Revendications

1. Procédé de production d'une lentille en polyuréthane, comprenant polymériser une composition contenant
- un composé polyisocyanate (A),
- un composé polythiol (B) obtenu par réaction d'estérification d'un composé polyol et d'acide thioglycolique,
- un catalyseur de polymérisation (C), et
- 0,001-0,5 partie en poids, pour 100 parties en poids de [(A) + (B)], d'un composé ester de phosphate acide (D) de formule (1), 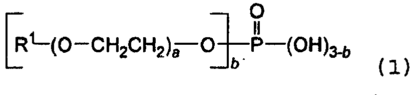 dans laquelle R¹ est un alkyle en C₁₋₂₀ ou un aryle en C₆₋₁₀; *a* est un nombre de 0 à 2; et *b* est 1 ou 2;
lequel procédé comprend préparer la composition en mélangeant les composants (A) et (D), et ensuite en y ajoutant les composants (B) et (C).

2. Procédé selon la revendication 1, dans lequel le composé (A) est au moins un composé sélectionné parmi le diisocyanate d'hexaméthylène, le diisocyanate d'isophorone, le bis(isocyanatométhyl)cyclohexane, le diisocyanate de dicyclohexylméthane, le bis(isocyanatométhyl)bicycloheptane, le diisocyanate de méthyl-1,3-phénylène, le 1,3-bis(isocyanatométhyl)benzène et le diisocyanate de 4,4'-diphénylméthane.

3. Procédé selon la revendication 1 ou 2, dans lequel le composé (B) est au moins un composé sélectionné parmi le di(mercaptoacétate) d'éthylène glycol, le bis(mercaptoacétate) de diéthylène glycol, le tris(mercaptoacétate) de propanetriol, le bis(mercaptoacétate) de propanediol, le di(mercaptoacétate) de butanediol, le tris(mercaptoacétate) de triméthylolpropane, le bis(mercaptoacétate) d'éthylènebis(2-hydroxyéthylsulfide), le tris(mercaptoacétate) de triméthylolpropane, le tetrakis(mercaptoacétate) de pentaérythritol et l'hexa(mercaptoacétate) de dipentaéryhtritol.

4. Procédé selon l'une quelconque des revendications 1-3, dans lequel le catalyseur de polymérisation (C) est un composé d'étain organique de formule (2) ou (3) :
(R²)*_{c}*-Sn-X_{4-*c*} *(2)*
dans laquelle R² est un alkyle en C₁₋₄; X est F, Cl ou Br; et c est un nombre entier de 1 à 3, ou
(R³)₂-Sn-(O-C(=O)-R⁴)₂ (3)
dans laquelle R³ est un alkyle en C₁₋₄, et R⁴ est un alkyle en C₁₋₁₁.

5. Procédé selon l'une quelconque des revendications 1-4, dans lequel le composé (D) de formule (1) est au moins un sélectionné parmi un mélange de phosphate d'acide butoxyéthylique et de phosphate d'acide dibutoxyéthylique, un mélange de phosphate d'acide butoxyéthoxyéthylique et de phosphate d'acide de di(butoxyéthoxyéthylique), et un mélange de phosphate d'acide isotridécylique et de phosphate d'acide di(isotridécylique).
